# EUROPÄISCHE PATENTANMELDUNG

(11) **EP 4 152 434 A1**
(43) Veröffentlichungstag der Anmeldung: **22.03.2023**
(21) Anmeldenummer: 21197577.6
(22) Anmeldetag: 17.09.2021
(51) Int. Cl.: H01M 4/13, H01M 10/04, H01M 50/533, H01M 50/536, H01M 4/02

(54) **ENERGIESPEICHERELEMENT**

(71) Anmelder: VARTA Microbattery GmbH, 73479 Ellwangen Jagst (DE)
(72) Erfinder: Elmer, Martin, 73479 Ellwangen (DE); Soldner, Andreas, 91550 Dinkelsbühl (DE); Stern, Rainer, 73479 Ellwangen (DE)
(74) Vertreter: Ostertag & Partner Patentanwälte mbB

(57) **Zusammenfassung**

Ein Energiespeicherelement (100) umfasst eine erste Anode (101), eine zweite Anode (102), eine erste Kathode (103) und eine zweite Kathode (104). Die Anoden (101) und (102) und die Kathoden (103) und (104) umfassen jeweils ein Elektrodenmaterial (105, 106) sowie einen gemeinsamen Anodenstromkollektor (107) und Kathodenstromkollektor (108). Die gemeinsamen Stromkollektoren umfassen jeweils einen ersten Hauptbereich (109, 111) und einen zweiten Hauptbereich (110, 112), die beidseitig mit einer Schicht aus dem jeweiligen Elektrodenmaterial (107, 108) beladen sind, sowie zwischen den Hauptbereichen jeweils einen materialfreien Verbindungsabschnitt (113,114), der die ersten Hauptbereiche (109, 111) mit den zweiten Hauptbereichen (110, 112) verbindet und die nicht mit Elektrodenmaterial beladen sind. Die Anoden (101, 102) und die Kathoden (103, 104) bilden gemeinsam einen Verbundkörper (115), in dem sie, getrennt durch Separatorschichten (116), in der Sequenz erste Anode (101) / Separatorschicht (116) / erste Kathode (103) / Separatorschicht (116) / zweite Anode (102) / Separatorschicht (116) / zweite Kathode (104) vorliegen. Innerhalb des Verbundkörpers (115) liegen die materialfreien Verbindungsabschnitte (114, 114) jeweils gebogen vor und verbinden die erste und die zweite Anode (101, 102) sowie die erste und die zweite Kathode (103, 104). Der gebogene Verbindungsabschnitt (113) des Anodenstromkollektors (107) ragt hierbei aus einer Seite des Verbundkörpers (115) und der gebogene Verbindungsabschnitt (114) des Kathodenstromkollektors (108) aus einer anderen Seite des Verbundkörpers (115) heraus. Dabei steht der gebogene Verbindungsabschnitt (113) in unmittelbarem Kontakt mit einem ersten Kontaktblech (117) und der gebogene Verbindungsabschnitt (114) in unmittelbarem Kontakt mit einem zweiten Kontaktblech (118).

## Beschreibung

Die Erfindung betrifft ein Energiespeicherelement, das sich zur Bereitstellung sehr hoher Ströme eignet.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. Alternativ kann es sich bei dem Verbundkörper auch um einen Stapel aus Elektroden handeln.

Für Anwendungen imAutomobilbereich, für E-Bikes oderauch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

In der WO 2017/215900 A1 sind zylindrische Rundzellen beschrieben, bei denen ein Verbundkörper aus bandförmigen Elektroden gebildet ist und in Form eines Wickels vorliegt. Die Elektroden weisen jeweils mit Elektrodenmaterial beladene Stromkollektoren auf. Entgegengesetzt gepolte Elektroden sind innerhalb des Verbundkörpers versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle Kontaktplatten auf, die auf den Stirnseiten des Wickels aufsitzen und mit den Längsrändern der Stromkollektoren durch Verschweißung verbunden sind. Dadurch ist es möglich, die Stromkollektoren und damit auch die dazugehörigen Elektroden über ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Potentiell problematisch ist hierbei, dass die Ränder der Stromkollektoren beim Aufbringen der Kontaktplatten oft unkontrolliert gestaucht werden, woraus undefinierte Faltungen resultieren können. Ein großflächiger, formschlüssiger Kontakt zwischen den Stirnseiten und den Kontaktplatten wird dadurch erschwert. Zudem erhöht sich die Gefahr von stirnseitigen Fein- oder Kurzschlüssen, etwa in Folge einer Beschädigung des zwischen den Elektroden angeordneten Separators.

Zur Lösung dieses Problems wird in der WO 2020/096973 A1 vorgeschlagen, die Ränder der Stromkollektoren vorzubehandeln, insbesondere Teile der Stromkollektorränder zu entfernen, so dass sie rechteckförmig ausgebildet sind.

Eine gezielte Vorverformung der Ränder von Stromkollektoren ist aus der US 2018/0190962 A1 und aus der JP 2015-149499 A bekannt.

Die bekannten Lösungen haben den Nachteil, dass die Vorbehandlung der Stromkollektorränder sehr aufwendig ist.

### AUFGABE UND LÖSUNG

Demgegenüber lag der vorliegenden Erfindung die Aufgabe zugrunde, Energiespeicherelemente bereitzustellen, die sich durch einen Verbundkörper aus Elektroden und einem oder mehreren Separatoren auszeichnen, der leichter mittels besagter Kontaktplatten kontaktierbar ist. Weiterhin sollen sich die Energiespeicherelemente auch durch eine verbesserte Sicherheit auszeichnen.

Diese Aufgabe wird durch das Energiespeicherelement mit den Merkmalen des unabhängigen Anspruchs 1 gelöst. Bevorzugte Ausführungsformen der Erfindungsind in den abhängigen Ansprüchen definiert.

### Erfindungsgemäßes Energiespeicherelement

Das erfindungsgemäße Energiespeicherelement weist stets die unmittelbar folgenden Merkmale a. bis h. auf:
a. Es umfasst eine erste Anode, eine zweite Anode, eine erste Kathode und eine zweite Kathode.
b. Die erste und die zweite Anode umfassen jeweils ein negatives Elektrodenmaterial und einen gemeinsamen Anodenstromkollektor.
c. Der gemeinsame Anodenstromkollektor umfasst
   - einen ersten und einen zweiten Hauptbereich, von denen der erste beidseitig mit einer Schicht aus dem negativen Elektrodenmaterial der ersten Anode und der zweite beidseitig mit einer Schicht aus dem negativen Elektrodenmaterial der zweiten Anode beladen ist, sowie
   - zwischen dem ersten und dem zweiten Hauptbereich einen materialfreien Verbindungsabschnitt, der den ersten und den zweiten Hauptbereich miteinander verbindet und der nicht mit dem Elektrodenmaterial beladen ist.
d. Die erste und die zweite Kathode umfassen jeweils ein positives Elektrodenmaterial und einen gemeinsamen Kathodenstromkollektor.
e. Der gemeinsame Kathodenstromkollektor umfasst
   - einen ersten und einen zweiten Hauptbereich, von denen der erste beidseitig mit einer Schicht aus dem positiven Elektrodenmaterial der ersten Kathode und der zweite beidseitig mit einer Schicht aus dem positiven Elektrodenmaterial der zweiten Kathode beladen ist, sowie
   - zwischen dem ersten und dem zweiten Hauptbereich einen materialfreien Verbindungsabschnitt, der sich zwischen dem ersten und dem zweiten Hauptbereich erstreckt und der nicht mit dem Elektrodenmaterial beladen ist.
f. Die Anoden und die Kathoden bilden einen Verbundkörper, in dem sie, getrennt durch Separatorschichten, in der Sequenz erste Anode / Separatorschicht / erste Kathode / Separatorschicht / zweite Anode / Separatorschicht / zweite Kathode vorliegen.
g. Innerhalb des Verbundkörpers liegen die materialfreien Verbindungsabschnitte des gemeinsamen Anodenstromkollektors und des gemeinsamen Kathodenstromkollektors jeweils gebogen vor und verbinden die erste und die zweite Anode sowie die erste und die zweite Kathode, wobei der gebogene Verbindungsabschnitt des Anodenstromkollektors aus einer Seite des Verbundkörpers und der gebogene Verbindungsabschnitt des Kathodenstromkollektors aus einer anderen Seite des Verbundkörpers herausragt.
h. Das Energiespeicherelement weist ein erstes Kontaktblech auf, das mit dem gebogenen Verbindungsabschnitt des Anodenstromkollektors in unmittelbarem Kontakt steht, und ein zweites Kontaktblech, das mit dem gebogenen Verbindungsabschnitt des Kathodenstromkollektors in Kontakt steht.

Das erfindungsgemäße Energiespeicherelement zeichnet sich also besonders durch eine spezielle Konfiguration und Anordnung seiner Elektroden aus. Innerhalb des Verbundkörpers sind jeweils zwei positive und zwei negative Elektroden über einen gemeinsamen Stromkollektor miteinander verbunden, wobei zwei miteinander verbundene, gleichgepolte Elektroden eine entgegengesetzt gepolte Elektrode sandwichartig umschließen.

### Zylindrische Ausführungsform

Das erfindungsgemäße Energiespeicherelement kann als zylindrische Rundzelle oder auch prismatisch ausgebildet sein. In der zylindrischen Ausführungsform weist es die unmittelbar folgenden Merkmale a. bis g. auf:
a. Die Elektroden und die Stromkollektoren sowie die Schichten aus den Elektrodenmaterialien sind bandförmig ausgebildet.
b. Die Verbindungsabschnitte sind streifenförmig ausgebildet.
c. Es umfasst mindestens einen bandförmigen Separator, welcher die Separatorschichten umfasst.
d. Der Verbundkörper liegt in Form eines zylindrischen Wickels mit zwei endständigen Stirnseiten und einem Wickelmantel vor, in dem die Elektroden und der mindestens eine Separator spiralförmig aufgewickelt vorliegen.
e. Es umfasst ein zylindrisches Metallgehäuse umfassend einen umlaufenden Gehäusemantel und an den Stirnseiten einen kreisförmigen Boden und einen Deckel.
f. In dem Metallgehäuse ist der als Wickel ausgebildete Verbundkörper axial ausgerichtet, so dass der Wickelmantel an der Innenseite des umlaufenden Gehäusemantels anliegt.
g. Die gebogenen Verbindungsabschnitte der Stromkollektoren ragen aus den endständigen Stirnseiten des Wickels hervor.

Der Verbundkörper umfasst in dieser Ausführungsform bevorzugt einen bandförmigen Separator oder zwei bandförmige Separatoren, der oder die jeweils einen ersten und einen zweiten Längsrand sowie zwei Endstücke aufweisen.

Besonders bevorzugt zeichnet sich das erfindungsgemäße Energiespeicherelement in dieser Ausführungsform durch das unmittelbar folgende Merkmal a. aus:
a. Das Metallgehäuse umfasst ein becherförmiges, zylindrisch ausgebildetes Gehäuseteil mit einer endständigen Öffnung und ein Deckelbauteil, das die endständige Öffnung des becherförmig ausgebildeten Gehäuseteils verschließt.

Bevorzugt weist das Deckelbauteil einen kreisförmigen Umfang auf und ist derart in der kreisförmigen Öffnung des becherförmig ausgebildeten Gehäuseteils angeordnet, dass der Rand entlang einer umlaufenden Kontaktzone an der Innenseite des becherförmig ausgebildeten Gehäuseteils anliegt, wobei der Rand des Deckelbauteils mit dem becherförmig ausgebildeten Gehäuseteil über eine umlaufende Schweißnaht verbunden ist. In diesem Fall weisen die beiden Gehäuseteile bevorzugt die gleiche Polarität auf, sind also elektrisch entweder mit einer positiven oder einer negativen Elektrode gekoppelt. Das Gehäuse umfasst in diesem Fall noch eine Poldurchführung, die zur elektrischen Kontaktierung der nicht elektrisch mit dem Gehäuse verbundenen Elektrode dient.

In einer alternativen Ausführungsform ist auf den Rand des Deckelbauteils eine elektrisch isolierende Dichtung aufgezogen, die das Deckelbauteil von dem becherförmigen Gehäuseteil elektrisch trennt. In diesem Fall ist das Gehäuse meist durch einen Crimp-Verschluss abgedichtet.

Bevorzugt liegt die Höhe als zylindrische Rundzelle ausgebildeter Energiespeicherelemente im Bereich von 50 mm bis 150 mm. Der Durchmesser der zylindrischen Rundzellen liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

Der Anodenstromkollektor, der Kathodenstromkollektor und der Separator oder die Separatoren weisen in Ausführungsformen, bei denen die erfindungsgemäße Zelle eine zylindrische Rundzelle ist, bevorzugt die folgenden Dimensionen auf:
- Eine Länge im Bereich von 0,5 m bis 25 m
- Eine Breite im Bereich 30 mm bis 145 mm

Die Kontaktbleche weisen in dieser Ausführungsform bevorzugt eine kreisförmige Grundform auf.

### Prismatische Ausführungsform

In der prismatischen Ausführungsform weist das erfindungsgemäße Energiespeicherelement die unmittelbar folgenden Merkmale a. bis f. auf:
a. Die Elektroden und die Stromkollektoren sowie die Schichten aus den Elektrodenmaterialien sind polygonal, bevorzugt rechteckig, ausgebildet.
b. Die Verbindungsabschnitte sind streifenförmig ausgebildet.
c. Es umfasst mindestens einen bandförmigen oder rechteckigen Separator, welcher die Separatorschichten umfasst.
d. Der Verbundkörper liegt in Form eines prismatischen Stapels vor, in dem die Elektroden und die Separatorschichten gestapelt vorliegen.
e. Der Stapel ist von einem prismatischen Gehäuse umschlossen,
f. Die gebogenen Verbindungsabschnitte der Stromkollektoren ragen aus den benachbarten oder gegenüberliegenden Seiten des Stapels hervor.

Das prismatische Gehäuse setzt sich bevorzugt aus einem becherförmigen Gehäuseteil mit einer endständigen Öffnung und einem Deckelbauteil zusammen. Der Boden des becherförmigen Gehäuseteils und das Deckelbauteil weisen in dieser Ausführungsform bevorzugt eine polygonale, besonders bevorzugt eine rechteckige Grundfläche, auf. Die Form der endständigen Öffnung des becherförmigen Gehäuseteils entspricht der Form des Bodens und des Deckelbauteils. Darüber hinaus umfasst das Gehäuse mehrere, bevorzugt vier, rechteckige Seitenteile, die den Boden und das Deckelbauteil miteinander verbinden.

Die Separatorschichten können von mehreren Separatoren gebildet werden, die jeweils zwischen benachbarten Elektroden angeordnet sind. Es ist aber auch möglich, dass ein bandförmiger Separator die Elektroden des Stapels voneinander separiert. Im Falle mehrerer Separatoren zwischen den Anoden und Kathoden weisen die Separatoren bevorzugt ebenfalls eine polygonale, insbesondere rechteckige, Grundfläche auf.

Die Kontaktbleche weisen in dieser Ausführungsform bevorzugt eine rechteckige Grundform auf.

### Bevorzugte elektrochemische Ausführungsform

In einer weiteren besonders bevorzugten Ausführungsform der Erfindung zeichnet sich das erfindungsgemäße Energiespeicherelement durch eines der folgenden Merkmale aus:
a. Das Energiespeicherelement ist eine Lithium-Ionen-Zelle.
b. Das Energiespeicherelement umfasst eine Lithium-Ionen-Zelle.

Merkmal a. bezieht sich insbesondere auf die beschriebene Ausführungsform des erfindungsgemäßen Energiespeicherelements als zylindrische Rundzelle. In dieser Ausführungsform umfasst das Energiespeicherelement bevorzugt genau eine elektrochemische Zelle.

Merkmal b. bezieht sich insbesondere auf die beschriebene prismatische Ausführungsform des erfindungsgemäßen Energiespeicherelements. In dieser Ausführungsform kann das Energiespeicherelement auch mehr als eine elektrochemische Zelle umfassen.

Für die Elektroden des Energiespeicherelements können im Grunde sämtliche für sekundäre Lithium-Ionen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Weiterhin sich auch dünne Anoden aus metallischem Lithium.

Für die positiven Elektroden kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel Li-NiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Das erfindungsgemäße Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid(LiTFSI), Lithiumbis(fluorosulfonyl)imid(LiFSI) und Lithiumbis(oxalato)borat (LiBOB).

Die Nennkapazität eines als zylindrische Rundzelle ausgebildeten erfindungsgemäßen Energiespeicherelements auf Lithium-Ionen-Basis beträgt bevorzugt bis zu 90000 mAh. Mit dem Formfaktor von 21 × 70 hat das Energiespeicherelement in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 × 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Bevorzugte Ausführungsformen des Separators

Bevorzugt werden der Separator oder die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

Insbesondere bei den prismatischen Ausführungsformen des Energiespeicherelements kann es sich bei dem Separator oder den Separatoren des Verbundes auch um eine oder mehrere Schichten aus einem Festelektrolyten handeln.

### Bevorzugte Struktur eines als Wickel ausgebildeten Verbundkörpers

In dem als Wickel ausgebildeten Verbundkörper liegen die bandförmige Anode, die bandförmige Kathode und der oder die bandförmigen Separatoren bevorzugt spiralförmig aufgewickelt vor. Zur Herstellung des Verbundkörpers werden die bandförmigen Elektroden gemeinsam mit dem oder den bandförmigen Separatoren einer Wickelvorrichtung zugeführt und bevorzugt in dieser um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der aufeinem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

### Bevorzugte Ausführungsformen der Stromkollektoren

Die Stromkollektoren des Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle eines Energiespeicherelements auf Basis von Lithium-Ionen-Technologie eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich im Falle eines Energiespeicherelements auf Basis von Lithium-Ionen-Technologie insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, im Fall der beschriebenen Konfiguration des Energiespeicherelements als zylindrische Rundzelle um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Im Fall der beschriebenen Konfiguration des Energiespeicherelements als zylindrische Rundzelle ist es bevorzugt, dass die Längsränder des oder der Separatoren die Stirnseiten des als Wickel ausgebildeten Verbundkörpers bilden.

Im Fall der beschriebenen prismatischen Konfiguration des Energiespeicherelements ist es bevorzugt, dass die Ränder des oder der Separatoren die Seiten des Stapels bilden, aus denen die gebogenen Verbindungsabschnitte der Stromkollektoren hervortreten.

Es ist weiterhin bevorzugt, dass die aus den endständigen Stirnseiten des Wickels oder Seiten des Stapels austretenden gebogenen Verbindungsabschnitte der Stromkollektoren nicht mehr als 5500 µm, bevorzugt nicht mehr als 4000 µm, aus den Stirnseiten oder den Seiten herausragen.

Besonders bevorzugt ragt der gebogene Verbindungsabschnitt des Anodenstromkollektors aus der Seite des Stapels oder der Stirnseite des Wickels nicht mehr als 3000 µm, besonders bevorzugt nicht mehr als 2000 µm, heraus. Besonders bevorzugt ragt der gebogene Verbindungsabschnitt des Kathodenstromkollektors aus der Seite des Stapels oder der Stirnseite des Wickels nicht mehr als 4000 µm, besonders bevorzugt nicht mehr als 3000 µm, heraus.

### Bevorzugte Ausführungsformen des ersten Kontaktblechs / Anbindung des ersten Kontaktblechs an den Anodenstromkollektor

Das erste Kontaktblech ist mit Anodenstromkollektor elektrisch verbunden. Besonders bevorzugt ist es mit dem gebogenen Verbindungsabschnitt des Anodenstromkollektors unmittelbar durch Verschweißung verbunden.

In einer alternativen Ausführungsform kann das erste Kontaktblech mit dem gebogenen Verbindungsabschnitt des Anodenstromkollektors aber auch mechanisch, beispielsweise durch eine Pressverbindung oder eine Klemmverbindung oder eine Federverbindung, verbunden sein.

In einer besonders bevorzugten Ausführungsform der Erfindung zeichnet sich das erste Kontaktblech durch mindestens eines der unmittelbar folgenden Merkmale a. oder b. aus:
a. Das Kontaktblech besteht aus Nickel oder Kupfer oder Titan oder eine Nickel- oder Kupferoder Titanlegierung oder Edelstahl.
b. Das Kontaktblech besteht aus dem gleichen Material wie der Anodenstromkollektor.

Es ist bevorzugt, dass die unmittelbar vorstehenden Merkmale a. und b. in Kombination miteinander realisiert sind.

Das Kontaktblech ist entweder mit dem Gehäuse elektrisch verbunden oder aber mit einem Kontaktpol, der durch das Gehäuse geführt und gegenüber dem Gehäuse elektrisch isoliert ist. Der elektrische Kontakt kann hierbei durch unmittelbar Verschweißung oder eine mechanische Verbindung realisiert sein. Gegebenenfalls kann die elektrische Verbindung auch über einen separaten elektrischen Leiter bestehen.

In einer weiteren besonders bevorzugten Ausführungsform der Erfindung zeichnet sich das erste Kontaktblech durch mindestens eines der unmittelbar folgenden Merkmale a. bis g. aus:
a. Das Kontaktblech weist eine bevorzugt gleichmäßige Dicke im Bereich von 50 µm bis 600 µm, bevorzugt im Bereich von 150 µm bis 350 µm, auf.
b. Das Kontaktblech weist zwei sich gegenüberliegenden Flachseiten auf und erstreckt sich im Wesentlichen nur in einer Dimension.
c. Das Kontaktblech ist eine Scheibe oder eine bevorzugt rechteckige Platte.
d. Das Kontaktblech ist derart dimensioniert, dass es mindestens 60 %, bevorzugt mindestens 70%, besonders bevorzugt mindestens 80%, der Seite oder Stirnseite, aus der der gebogene Verbindungsabschnitt des Anodenstromkollektors heraustritt, abdeckt.
e. Das Kontaktblech weist mindestens eine Durchbrechung, insbesondere mindestens ein Loch und oder mindestens einen Schlitz, auf.
f. Das Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem gebogenen Verbindungsabschnitt des Anodenstromkollektors aufsitzt.
g. Das Kontaktblech ist im Bereich der Sicke mit dem gebogenen Verbindungsabschnitt des Anodenstromkollektors verschweißt, insbesondere über eine oder mehrere in der Sicke angeordnete Schweißnähte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind alle Merkmale a. bis g. in Kombination miteinander realisiert.

Die möglichst großflächige Abdeckung der Stirnseite ist für das thermische Management des erdungsgemäßen Energiespeicherelements von Bedeutung. Je größer die Abdeckung ist, desto eher ist es möglich, den ersten Rand des Anodenstromkollektors möglichst über seine gesamte Länge zu kontaktieren. Im Verbundkörper gebildete Wärme kann so gut über das Kontaktblech abgeführt werden.

Die mindestens eine Durchbrechung in dem Kontaktblech kann beispielsweise zweckmäßig sein, um den Verbundkörper mit einem Elektrolyten tränken zu können.

In einer besonders bevorzugten Ausführungsform weist der Verbundkörper eine Seite auf, aus der mehr als einen gebogener Verbindungsabschnitt eines Anodenstromkollektors herausragt. In einer Weiterbildung dieser Ausführungsform ist es bevorzugt, dass mindestens zwei der gebogenen Verbindungsabschnitte, bevorzugt mehrere benachbarte Verbindungsabschnitte, miteinander in unmittelbarem Kontakt stehen, also nicht nur über das erste Kontaktblech elektrisch miteinander verbunden sind.

### Bevorzugte Ausführungsformen des zweiten Kontaktblechs /Anbindung des zweiten Kontaktblechs an den Kathodenstromkollektor

Das zweite Kontaktblech ist mit Kathodenstromkollektor elektrisch verbunden. Besonders bevorzugt ist es mit dem gebogenen Verbindungsabschnitt des Kathodenstromkollektors unmittelbar durch Verschweißung verbunden.

In einer alternativen Ausführungsform kann das zweite Kontaktblech mit dem gebogenen Verbindungsabschnitt des Kathodenstromkollektors aber auch mechanisch, beispielsweise durch eine Pressverbindung, eine Federverbindung oder eine Klemmverbindung, verbunden sein.

In einer besonders bevorzugten Ausführungsform der Erfindung zeichnet sich das erfindungsgemäße Energiespeicherelement durch das unmittelbar folgende Merkmal a. aus:
a. Das zweite Kontaktblech besteht aus Aluminium oder aus einer Aluminiumlegierung.

Das Kontaktblech ist entweder mit dem Gehäuse elektrisch verbunden oder aber mit einem Kontaktpol, der durch das Gehäuse geführt und gegenüber dem Gehäuse elektrisch isoliert ist. Der elektrische Kontakt kann hierbei durch unmittelbar Verschweißung oder eine mechanische Verbindung realisiert sein. Gegebenenfalls kann die elektrische Verbindung auch über einen separaten elektrischen Leiter bestehen.

Das zweite Kontaktblech ist bevorzugt, abgesehen von seiner materiellen Beschaffenheit, ähnlich dem auf dem ersten Rand des Anodenstromkollektors aufsitzenden Kontaktblech ausgebildet. Es zeichnet sich bevorzugt durch mindestens eines der unmittelbar folgenden Merkmale a. bis g. aus:
a. Das zweite Kontaktblech weist eine bevorzugt gleichmäßige Dicke im Bereich von 50 µm bis 600 µm, bevorzugt im Bereich von 150 µm bis 350 µm, auf.
b. Das zweite Kontaktblech weist zwei sich gegenüberliegenden Flachseiten auf und erstreckt sich im Wesentlichen nur in einer Dimension.
c. Das zweite Kontaktblech ist eine Scheibe oder eine bevorzugt rechteckige Platte.
d. Das zweite Kontaktblech ist derart dimensioniert, dass es mindestens 60 %, bevorzugt mindestens 70 %, besonders bevorzugt mindestens 80 %, der Seite oder Stirnseite, aus der der gebogene Verbindungsabschnitt des Kathodenstromkollektors heraustritt, abdeckt.
e. Das zweite Kontaktblech weist mindestens eine Durchbrechung, insbesondere mindestens ein Loch und oder mindestens einen Schlitz, auf.
f. Das zweite Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhungträgt, auf dem gebogenen Verbindungsabschnitt des Kathodenstromkollektors aufsitzt.
g. Das zweite Kontaktblech ist im Bereich der Sicke mit dem gebogenen Verbindungsabschnitt des Kathodenstromkollektors verschweißt, insbesondere über eine oder mehrere in der Sicke angeordnete Schweißnähte.

Auch hier ist es besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind auch hier alle Merkmale a. bis g. in Kombination miteinander realisiert.

Die Anbindung bzw. Anschweißung des gebogenen Verbindungsabschnitts des Kathodenstromkollektors an das zweite Kontaktblech ist bevorzugt analog zur oben beschriebenen Anbindung des gebogenen Verbindungsabschnitts des Anodenstromkollektors realisiert, also besonders bevorzugt über eine Verschweißung im Bereich der Sicke.

In bevorzugten Ausführungsformen ist das zweite Kontaktblech unmittelbar mit dem Boden des becherförmigen Gehäuseteils oder einem Teil des Bodens verschweißt. In weiteren bevorzugten Ausführungsformen ist das zweite Kontaktblech über einen separaten Stromleiter mit dem Boden des becherförmigen Gehäuseteils verbunden. In letzterem Fall ist es bevorzugt, dass der separate Stromleitersowohl mit dem Boden des becherförmigen Gehäuseteils als auch mit dem zweiten Kontaktblech verschweißt ist. Der separate Stromleiter besteht bevorzugt aus Aluminium oder einer Aluminiumlegierung.

In einer besonders bevorzugten Ausführungsform weist der Verbundkörper eine Seite auf, aus der mehr als einen gebogener Verbindungsabschnitt eines Kathodenstromkollektors herausragt. In einer Weiterbildung dieser Ausführungsform ist es bevorzugt, dass mindestens zwei der gebogenen Verbindungsabschnitte, bevorzugt mehrere benachbarte Verbindungsabschnitte, miteinander in unmittelbarem Kontakt stehen, also nicht nur über das zweite Kontaktblech elektrisch miteinander verbunden sind.

### Bevorzugte Ausgestaltung der Gehäuseteile

In einer weiteren besonders bevorzugten Ausführungsform der Erfindung zeichnet sich das erfindungsgemäße Energiespeicherelement durch mindestens eines der unmittelbar folgenden Merkmale a. und b. aus:
a. Das becherförmig ausgebildete Gehäuseteil besteht aus Aluminium, Edelstahl oder einem vernickelten Stahl.
b. Das Deckelbauteil besteht aus Aluminium, Edelstahl oder einem vernickelten Stahl.

Besonders bevorzugt sind die unmittelbar vorstehenden Merkmale a. und b. in Kombination realisiert.

In einigen Ausführungsformen ist eine direkte Anbindung des gebogenen Verbindungsabschnitts des Kathodenstromkollektors an das Gehäuse wünschenswert. Zu diesem Zweck kann der gebogene Verbindungsabschnitt beispielsweise mittels eines Lasers an den Boden des becherförmig ausgebildeten Gehäuseteils geschweißt werden. Der Boden des becherförmig ausgebildeten Gehäuseteils dient in diesem Fall als zweite Kontaktplatte.

Umgekehrt kann es in einigen Ausführungsformen vorgesehen sein, dass die erste Kontaktplatte als Deckelbauteil dient, also Teil des Gehäuses dient.

### Bevorzugte Ausgestaltung der Elektroden

In einer weiteren besonders bevorzugten Ausführungsform der Erfindung zeichnet sich das erfindungsgemäße Energiespeicherelement durch eines der unmittelbar folgenden Merkmale a. oder b. aus:
a. Das erfindungsgemäße Energiespeicherelement ist als zylindrische Rundzelle ausgebildet und seine Elektroden weisen eine Dicke im Bereich von 40 µm bis 300 µm, bevorzugt im Bereich von 40 µm bis 100 µm, auf.
b. Das erfindungsgemäße Energiespeicherelement ist prismatisch ausgebildet und seine Elektroden weisen eine Dicke im Bereich von 40 µm bis 1000 µm, bevorzugt eine Dicke > 100 µm bis maximal 300 µm, auf.

Im Falle einer zylindrischen Konfiguration werden die erste und die zweite Anode sowie die erste und die zweite Kathode gleichzeitig gewickelt, die jeweils außenliegende Elektrode müsste für die gleiche Anzahl von Windungen aber etwas länger sein als die jeweils innenliegende. Damit hieraus keine Probleme resultieren, wird die Dicke der Elektroden bei einer zylindrischen Konfiguration bevorzugt sehr klein gewählt. Bei einer prismatischen Konfiguration spielt dieser Aspekt keine Rolle.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

### In den Zeichnungen zeigen

- Fig. 1 eine Zeichnung eines Querschnitts durch eine Zelle des Standes der Technik, bei der eine Kontaktplatte auf einen überstehenden Rand eines Stromkollektors aufgepresst wurde,
- Fig. 2 schematisch eine erste Anode und eine zweite Anode mit einem gemeinsamen Stromkollektor (Draufsicht von oben sowie im Querschnitt),
- Fig. 3 schematisch eine erste Kathode und eine zweite Kathode mit gemeinsamem Stromkollektor (Draufsicht von oben sowie im Querschnitt),
- Fig. 4 schematisch einen Verbundkörper, der aus den in Fig. 2 dargestellten Anoden und den in Figur 3 dargestellten Kathoden gebildet ist (Darstellung im Querschnitt),
- Fig. 5 schematisch einen prismatischen Verbundkörper mit zwei darauf aufsitzenden Kontaktplatten, gleichfalls im Querschnitt,
- Fig. 6 die Elektroden des in Fig. 5 dargestellten Verbundkörpers (Draufsicht von oben),
- Fig. 7 schematisch ein Energiespeicherelement gemäß der Erfindung, umfassend den in Fig. 5 dargestellten prismatischen Verbundkörper und ein Gehäuse dafür, gleichfalls im Querschnitt,
- Fig. 8 einen Stromkollektor mit zwei bandförmigen Treifen aus Elektrodenmaterial, die durch einen strukturell geschwächten Mittelstreifen miteinander verbunden sind (Draufsicht senkrecht von oben).
- Fig. 9 eine weitere Ausführungsform einesVerbundkörpers, der aus Anoden und Kathoden gemäß Fig. 2 und 3 gebildet werden kann, und
- Fig. 10 eine weitere Ausführungsform eines prismatischen Verbundkörpers mit zwei darauf aufsitzenden Kontaktplatten, gleichfalls im Querschnitt.

### DETAILLIERTE BESCHREIBUNG DERAUSFÜHRUNGSBEISPIELE

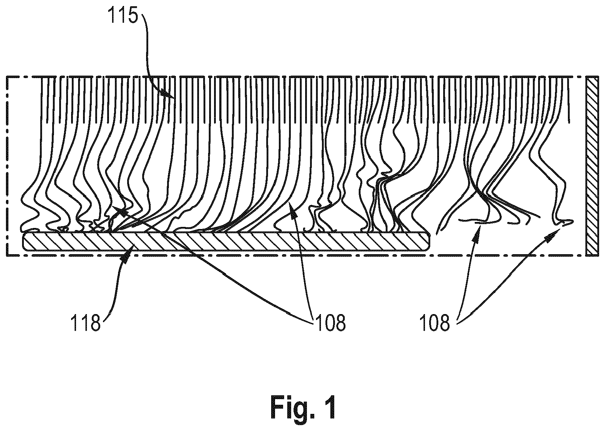

**Fig. 1** illustriert das Resultat eines Aufpressens einer Kontaktplatte 118 auf einen überstehenden Rand 108 eines Stromkollektors, der aus einer Seite eines Verbundkörpers 115 aus negativen und positiven Elektroden sowie dazwischen liegenden Separatoren (in der Zeichnung nicht dargestellt) austritt. Bei dem Aufpressen kam es zu einer unkontrollierten Stauchung der Ränder (108) der Stromkollektoren. Die Stauchung resultiert wiederum teilweise in undefinierten Faltungen, wie insbesondere in dem rot umrandeten Bereich gut zu erkennen ist. Ein großflächiger, formschlüssiger Kontakt zwischen dem Stromkollektorrand 108 und der Kontaktplatte 118 wird dadurch erschwert.

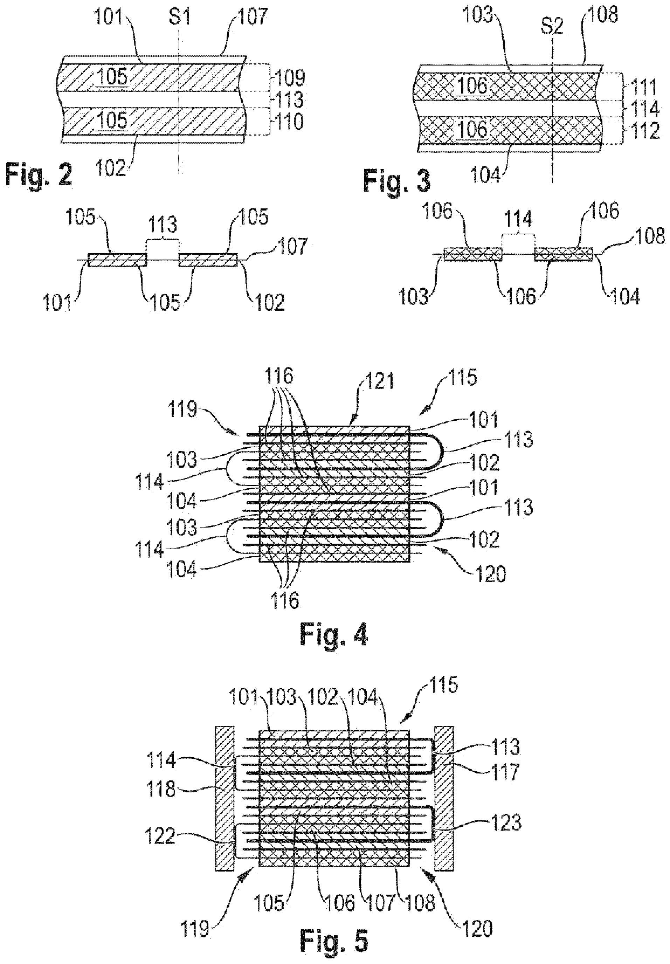

**Fig. 2** zeigt einen bandförmigen Stromkollektor 107, auf den die erste bandförmige Anode 101 und die zweite bandförmige Anode 102 aufgebracht sind, zum einen in einer Draufsicht von oben sowie zum anderen in einer Querschnittsdarstellung (Schnitt entlang S1).

Die erste Anode 101 und die zweite Anode 102 umfassen beidseits des gemeinsamen Stromkollektors 107 jeweils eine bandförmige Schicht aus dem Elektrodenmaterial 105. Der bandförmige Stromkollektor 107 umfasst einen ersten Hauptbereich 109 und einen zweiten Hauptbereich 110, von denen der erste Hauptbereich 109 mit den bandförmigen Schichten aus dem negativen Elektrodenmaterial 105 der ersten Anode 101 und der zweite Hauptbereich 110 mit den bandförmigen Schichten aus dem negativen Elektrodenmaterial 105 der zweiten Anode 102 beladen ist. Zwischen dem ersten Hauptbereich 109 und dem zweiten Hauptbereich 110 findet sich ein streifenförmiger, materialfreien Verbindungsabschnitt 113, der den ersten Hauptbereich 109 und den zweiten Hauptbereich 110 miteinander verbindet und der nicht mit dem Elektrodenmaterial 105 beladen ist.

**Fig. 3** zeigt einen bandförmigen Stromkollektor 108, auf den die erste bandförmige Kathode 103 und die zweite bandförmige Kathode 104 aufgebracht sind, zum einen in einer Draufsicht von oben sowie zum anderen in einer Querschnittsdarstellung (Schnitt entlang S2).

Die erste Kathode 103 und die zweite Kathode 104 umfassen beidseits des gemeinsamen Stromkollektors 108 jeweils eine bandförmige Schicht aus dem Elektrodenmaterial 106. Der bandförmige Stromkollektor 108 umfasst einen ersten Hauptbereich 111 und einen zweiten Hauptbereich 112, von denen der erste Hauptbereich 111 mit den bandförmigen Schichten aus dem positiven Elektrodenmaterial 106 der ersten Kathode 103 und der zweite Hauptbereich 112 mit den bandförmigen Schichten aus dem positiven Elektrodenmaterial 106 derzweiten Kathode 104 beladen ist. Zwischen dem ersten Hauptbereich 111 und dem zweiten Hauptbereich 112 findet sich ein streifenförmiger, materialfreien Verbindungsabschnitt 114, der den ersten Hauptbereich 111 und den zweiten Hauptbereich 112 miteinander verbindet und der nicht mit dem Elektrodenmaterial 106 beladen ist.

Der in **Fig. 4** dargestellte Verbundkörper 115 (Darstellung im Querschnitt) ist aus den in Fig. 2 dargestellten Anoden 101 und 102 und den in Figur 3 dargestellten Kathoden 103 und 104 gebildet. Hierzu werden die bandförmigen Anoden 101 und 102 sowie die Kathoden 103 und 104 jeweils unter Umbiegen des gemeinsamen Stromkollektors 107 und 108 miteinander in Deckung gebracht, wobei gleichzeitig die Kathode 103 zwischen den Anoden 101 und 102 und die Anode 102 zwischen den Kathoden 103 und 104 angeordnet und alle benachbarten Elektroden durch Separatorschichten 116, die zwischen Ihnen angeordnet werden, voneinander getrennt werden. Der hierbei entstehende Stapel der Sequenz Anode 101 / Separatorschicht 116 / Kathode 103 / Separatorschicht 116 / Anode 102 / Separatorschicht 116 / Kathode 104 kann in einem weiteren Schritt spiralförmig um eine Achse aufgewickeltwerden. Der Verbundkörper 115 liegtdann in Form eines zylindrischen Wickels mit zwei endständigen Stirnseiten 119 und 120 und einem Wickelmantel 121 vor, in dem die Elektroden 101, 102, 103 und 104 spiralförmig gewickelt vorliegen. Der dargestellte Querschnitt ist ein Schnitt durch zwei aneinanderliegende Windungen eines solchen spiralförmigen Wickels.

Im Ergebnis ist die Kathode 103 in dem Wickel sandwichartig zwischen den Anoden 101 und 102 und die Anode 102 sandwichartig zwischen den Kathoden 103 und 104 eingeschlossen. Aus der linken Seite 119 des Verbundkörpers 115 tritt ausschließlich der materialfreie, nun gebogene Verbindungsabschnitt 114 aus, aus der rechten, gegenüberliegenden Seite 120 der materialfreie, nun gebogenen Verbindungsabschnitt 113.

**Fig. 5** zeigt einen Verbundkörper 115, der in Form eines prismatischen Stapels vorliegt. In dem Stapel liegen die Elektroden 101, 102, 103 und 104 sowie 105, 106, 107 und 108 gestapelt vor, jeweils getrennt durch Separatorschichten 116. Die Elektroden weisen eine rechteckige Grundform auf. Die Elektroden 101 und 102, 103 und 104, 105 und 107 sowie 106 und 108 weisen jeweils einen gemeinsamen Stromkollektor auf und sind über die gebogenen, materialfreien Verbindungsabschnitte 113 und 114 und 122 und 123 miteinander verbunden.

Aus der linken 119 Seite des Stapels 115 treten ausschließlich die mit positiven Elektroden gekoppelten materialfreien Verbindungsabschnitte 114 und 122 aus, aus der rechten, gegenüberliegenden Seite 120 die mit negativen Elektroden gekoppelten materialfreien Verbindungsabschnitte 113 und 123. Die gebogenen Verbindungsabschnitte 114 und 122 stehen mit einem Kontaktblech 118 in unmittelbarem Kontakt. Die gebogenen Verbindungsabschnitte 113 und 123 stehen mit einem Kontaktblech 117 in unmittelbarem Kontakt. Da die Kontaktbleche 117 und 118 mit leichtem Druck auf die Seiten 119 und 120 aufgebracht wurden, besteht ein flächiger Kontakt zu den vier Verbindungsabschnitten 113, 123, 114 und 123. Bevorzugt sind die gebogenen Verbindungsabschnitte 113, 123, 114 und 123 mit den Kontaktblechen 117 und 118 verschweißt.

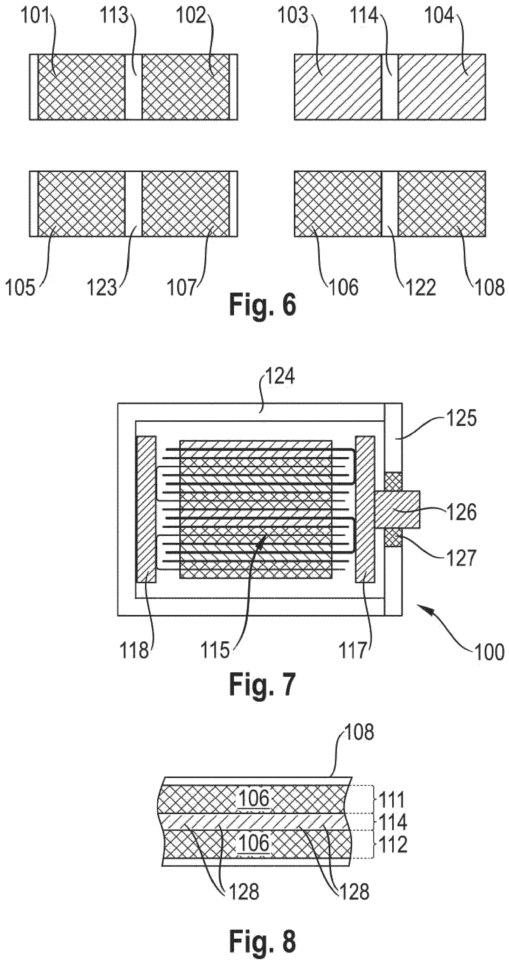

In **Fig. 6** sind die Elektroden 101, 102, 103 und 104 sowie 105, 106, 107 und 108 in einer Draufsicht dargestellt. Gut zu erkennen sind die materialfreien Verbindungsabschnitte 113 und 114 und 122 und 123. Zur Herstellung des Stapels 115 müssen die über den jeweiligen Verbindungsabschnitt miteinander verbundenen Elektroden unter Umbiegen des Verbindungsabschnitts miteinander in Deckung gebracht werden. Danach werden entgegengesetzt gepolte Elektroden sandwichartig miteinander kombiniert mit dem in Fig. 5 dargestellten Resultat.

In **Fig. 7** ist ein Energiespeicherelement 100 gemäß der Erfindung dargestellt. Es umfasst den in Fig. 5 dargestellten prismatischen Verbundkörper 115 und ein prismatisches Gehäuse. Das prismatische Gehäuse setzt sich zusammen aus dem becherförmigen Gehäuseteil 124 und dem Deckelbauteil 125. Durch das Deckelbauteil 125 ist der Kontaktpol 126 geführt, der mit dem Kontaktblech 117 durch Verschweißung verbunden ist. Gegenüber dem Deckelbauteil 125 ist der Kontaktpol 126 mittels des Isolierelements 127 elektrisch isoliert. Das Kontaktblech 118 ist an den Boden des Gehäuseteils 124 geschweißt.

In **Fig. 8** ist ein Stromkollektor mit zwei bandförmigen Streifen aus einem Elektrodenmaterial 106 dargestellt, die durch einen strukturell geschwächten streifenförmigen, materialfreien Verbindungsabschnitt 114 miteinander verbunden sind. In den Verbindungsabschnitt 114 ist eine Vielzahl kleiner Schnitte 128 eingebracht, die ihn strukturell schwächen. Diese erleichtern die Verarbeitung der Elektroden zu einem spiralförmigen Wickel.

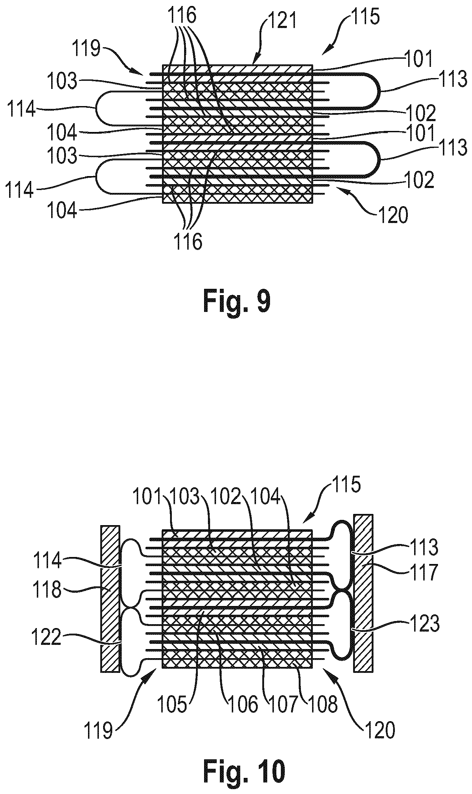

**Fig. 9** zeigt einen Verbundkörper 115, der sich von dem in **Fig. 4** dargestellten Verbundkörper nur dadurch unterscheidet, dass die Verbindungsabschnitte 113 und 114 der Stromkollektoren vergleichsweise länger ausgebildet sind und daher weiter aus der Seite des Stapels herausragen. Solche Ausführungsformen ermöglichen Konfigurationen, in denen Verbindungsabschnitte benachbarter Windungen nicht nur über ein Kontaktblech miteinander verbunden sind sondern unmittelbar miteinander in Kontakt stehen.

**Fig. 10** zeigt einen Verbundkörper 115, der sich von dem in Fig. 5 dargestellten Verbundkörper nur darin unterscheidet, dass die Verbindungsabschnitte 113 und 123 sowie 114 und 122 der Stromkollektoren vergleichsweise länger ausgebildet sind. In der dargestellten Ausführungsform sind sie derart lang ausgebildet, dass sie durch die Kontaktbleche 117 und 118 so deformiert werden können, dass sie mit benachbarten Verbindungsabschnitten (hier der Verbindungsabschnitt 114 mit dem Verbindungsabschnitt 122 und derVerbindungsabschnitt 113 mit dem Verbindungsabschnitt 123) in unmittelbarem Kontakt stehen. Hierdurch wird unterhalb der Kontaktbleche 117 und 118 eine im Idealfall nahezu durchgehende leitende Fläche geschaffen, die die Ableitung thermischer Energie sowie auch die elektrische Anbindung des Verbundkörpers 115 an die Kontaktbleche in erheblichem Maß begünstigt.

## Patentansprüche

1. Energiespeicherelement (100) mit den folgenden Merkmalen:
a. Es umfasst eine erste Anode (101), eine zweite Anode (102), eine erste Kathode (103) und eine zweite Kathode (104).
b. Die erste Anode (101) und die zweite Anode (102) umfassen jeweils ein negatives Elektrodenmaterial (105) und einen gemeinsamen Anodenstromkollektor (107).
c. Der gemeinsame Anodenstromkollektor (107) umfasst
• einen ersten Hauptbereich (109) und einen zweiten Hauptbereich (110), von denen der erste Hauptbereich (109) beidseitig mit einer Schicht aus dem negativen Elektrodenmaterial (105) der ersten Anode (101) und der zweite Hauptbereich (110) beidseitig mit einer Schicht aus dem negativen Elektrodenmaterial (105) der zweiten Anode (102) beladen ist, sowie
• zwischen dem ersten Hauptbereich (109) und dem zweiten Hauptbereich (110) einen materialfreien Verbindungsabschnitt (113), der den ersten Hauptbereich (109) und den zweiten Hauptbereich (110) miteinander verbindet und der nicht mit dem Elektrodenmaterial (105) beladen ist.
d. Die erste Kathode (103) und die zweite Kathode (104) umfassen jeweils ein positives Elektrodenmaterial (106) und einen gemeinsamen Kathodenstromkollektor (108).
e. Der gemeinsame Kathodenstromkollektor (108) umfasst
• einen ersten Hauptbereich (111) und einen zweiten Hauptbereich (112), von denen der erste Hauptbereich (111) beidseitig mit einer Schicht aus dem positiven Elektrodenmaterial (106) der ersten Kathode (103) und der zweite beidseitig mit einer Schicht aus dem positiven Elektrodenmaterial (106) der zweiten Kathode (104) beladen ist, sowie
• zwischen dem ersten Hauptbereich (111) und dem zweiten Hauptbereich (112) einen materialfreien Verbindungsabschnitt (114), der sich zwischen dem ersten Hauptbereich (111) und dem zweiten Hauptbereich (112) erstreckt und der nicht mit dem Elektrodenmaterial (106) beladen ist.
f. Die Anoden (101) und (102) und die Kathoden (103) und (104) bilden einen Verbundkörper (115), in dem sie, getrennt durch Separatorschichten (116), in der Sequenz erste Anode (101) / Separatorschicht (116) / erste Kathode (103) / Separatorschicht (116) / zweite Anode (102) / Separatorschicht (116) / zweite Kathode (104) vorliegen.
g. Innerhalb des Verbundkörpers (115) liegen die materialfreien Verbindungsabschnitte (113, 114) des gemeinsamen Anodenstromkollektors (107) und des gemeinsamen Kathodenstromkollektors (108) jeweils gebogen vor und verbinden die erste Anode (101) und die zweite Anode (102) sowie die erste Kathode (103) und die zweite Kathode (104), wobei der gebogene Verbindungsabschnitt (113) desAnodenstromkollektors (107) aus einer Seite (120) des Verbundkörpers (115) und der gebogene Verbindungsabschnitt (114) des Kathodenstromkollektors (108) aus einer anderen Seite (119) des Verbundkörpers (115) herausragt.
h. Das Energiespeicherelement weist ein erstes Kontaktblech (117) auf, das mit dem gebogenen Verbindungsabschnitt (113) des Anodenstromkollektors (107) in unmittelbarem Kontakt steht, und ein zweites Kontaktblech (118), das mit dem gebogenen Verbindungsabschnitt (114) des Kathodenstromkollektors (108) in Kontakt steht.

2. Energiespeicherelement nach Anspruch 1 mit den folgenden zusätzlichen Merkmalen:
a. Die Elektroden (101, 102, 103, 104) und die Stromkollektoren (107, 108) sowie die Schichten aus den Elektrodenmaterialien (105, 106) sind bandförmig ausgebildet.
b. Die Verbindungsabschnitte (113, 114) sind streifenförmig ausgebildet.
c. Es umfasst mindestens einen bandförmigen Separator, welcher die Separatorschichten (116) umfasst.
d. DerVerbundkörper (115) liegt in Form eines zylindrischen Wickels mitzwei endständigen Stirnseiten und einem Wickelmantel vor, in dem die Elektroden (101, 102, 103, 104) und der mindestens eine Separator spiralförmig aufgewickelt vorliegen.
e. Es umfasst ein zylindrisches Metallgehäuse umfassend einen umlaufenden Gehäusemantel und an den Stirnseiten einen kreisförmigen Boden und einen Deckel.
f. In dem Metallgehäuse ist der als Wickel ausgebildete Verbundkörper (115) axial ausgerichtet, so dass der Wickelmantel an der Innenseite des umlaufenden Gehäusemantels anliegt.
g. Die gebogenen Verbindungsabschnitte (113, 114) der Stromkollektoren (107, 108) ragen aus den endständigen Stirnseiten des Wickels hervor.

3. Energiespeicherelement nach Anspruch 1 mit den folgenden zusätzlichen Merkmalen:
a. Die Elektroden (101, 102, 103, 104) und die Stromkollektoren (107, 108) sowie die Schichten aus den Elektrodenmaterialien (105, 106) sind rechteckig ausgebildet.
b. Die Verbindungsabschnitte (113, 114) sind streifenförmig ausgebildet.
c. Es umfasst mindestens einen bandförmigen oder rechteckigen Separator, welcher die Separatorschichten (116) umfasst.
d. Der Verbundkörper (15) liegt in Form eines prismatischen Stapels vor, in dem die Elektroden (101, 102, 103, 104) und die Separatorschichten (116) gestapelt vorliegen.
e. Der Stapel ist von einem prismatischen Gehäuse umschlossen,
f. Die gebogenen Verbindungsabschnitte (113, 114) der Stromkollektoren (107, 108) ragen aus den benachbarten oder gegenüberliegenden Seiten des Stapels hervor.

4. Energiespeicherelement nach Anspruch 1 mit den folgenden zusätzlichen Merkmalen:
a. Das erste Kontaktblech (117) ist mit dem gebogenen Verbindungsabschnitt (113) des Anodenstromkollektors (107) durch Verschweißung verbunden und/oder das zweite Kontaktblech (118) ist mit dem gebogenen Verbindungsabschnitt (114) des Kathodenstromkollektors (108) durch Verschweißung verbunden.
b. Das erste Kontaktblech (117) ist mit dem gebogenen Verbindungsabschnitt (113) des Anodenstromkollektors (107) mechanisch verbunden und/oder das zweite Kontaktblech (118) ist mit dem gebogenen Verbindungsabschnitt (114) des Kathodenstromkollektors (108) mechanisch verbunden.

5. Energiespeicherelement nach Anspruch 2 mit den folgenden zusätzlichen Merkmalen:
a. Die Elektroden (101, 102, 103, 104) weisen eine Dicke im Bereich von 40 µm bis 200 µm auf.

6. Energiespeicherelement nach Anspruch 3 mit den folgenden zusätzlichen Merkmalen:
a. Die Elektroden (101, 102, 103, 104) weisen eine Dicke im Bereich von 40 µm bis 1000 µm auf.
